Europäisches Patentamt

European Patent Office

Office européen des brevets

(19)

(11) **EP 0 991 881 B1**

(12) **FASCICULE DE BREVET EUROPEEN**

(45) Date de publication et mention
de la délivrance du brevet:
**29.05.2002 Bulletin 2002/22**

(51) Int Cl.⁷: **F16H 61/10**

(21) Numéro de dépôt: **98933732.4**

(22) Date de dépôt: **26.06.1998**

(86) Numéro de dépôt international:
**PCT/FR98/01361**

(87) Numéro de publication internationale:
**WO 99/01685 (14.01.1999 Gazette 1999/02)**

(54) **PROCEDE DE COMMANDE DES CHANGEMENTS DE RAPPORTS D'UNE TRANSMISSION AUTOMATIQUE**

STEUERUNGSVERFAHREN ZUM SCHALTEN EINES AUTOMATIKGETRIEBES

METHOD FOR CONTROLLING AN AUTOMATIC TRANSMISSION GEAR RATIO SHIFTS

(84) Etats contractants désignés:
**CH DE ES GB IT LI PT SE**

(30) Priorité: **02.07.1997 FR 9708324**

(43) Date de publication de la demande:
**12.04.2000 Bulletin 2000/15**

(73) Titulaires:
• **RENAULT**
**92109 Boulogne-Billancourt (FR)**
• **AUTOMOBILES PEUGEOT**
**75116 Paris (FR)**
• **AUTOMOBILES CITROEN**
**92200 Neuilly-sur-Seine (FR)**

(72) Inventeurs:
• **TAFFIN, Christian**
**F-78400 Chatou (FR)**
• **MESTRES, Robert**
**F-59880 Saint Sambre (FR)**

(56) Documents cités:
**EP-A- 0 406 616**      **EP-A- 0 410 345**
**FR-A- 2 545 567**      **US-A- 5 097 725**

EP 0 991 881 B1

**Description**

La présente invention concerne les transmissions automatiques de véhicules à rapports étagés. Elle concerne plus précisément un procédé de commande par blocage et de déblocage en logique floue des rapports de vitesses, qui permet d'améliorer l'agrément de conduite du véhicule ainsi que sa sécurité, et cela quelles que soient les conditions de conduite ou de roulage rencontrées (montée, descente, ou plat).

En effet, dans la plupart des méthodes de gestion des changements de rapports actuellement utilisées, en mode automatique, les changements de rapports sont décidés en fonction de la vitesse du véhicule et de la charge du moteur. Le plus souvent, ces critères de vitesse et de charge sont traduits sous forme de lois de changement de rapports, commodément visualisées dans le plan de coordonnées $V_{veh}/\alpha_{pap}$, $V_{veh}$ désignant la vitesse du véhicule et $\alpha_{pap}$ l'angle d'ouverture du papillon de gaz, ou plus généralement, le degré d'ouverture de l'organe de régulation de l'admission du combustible au moteur.

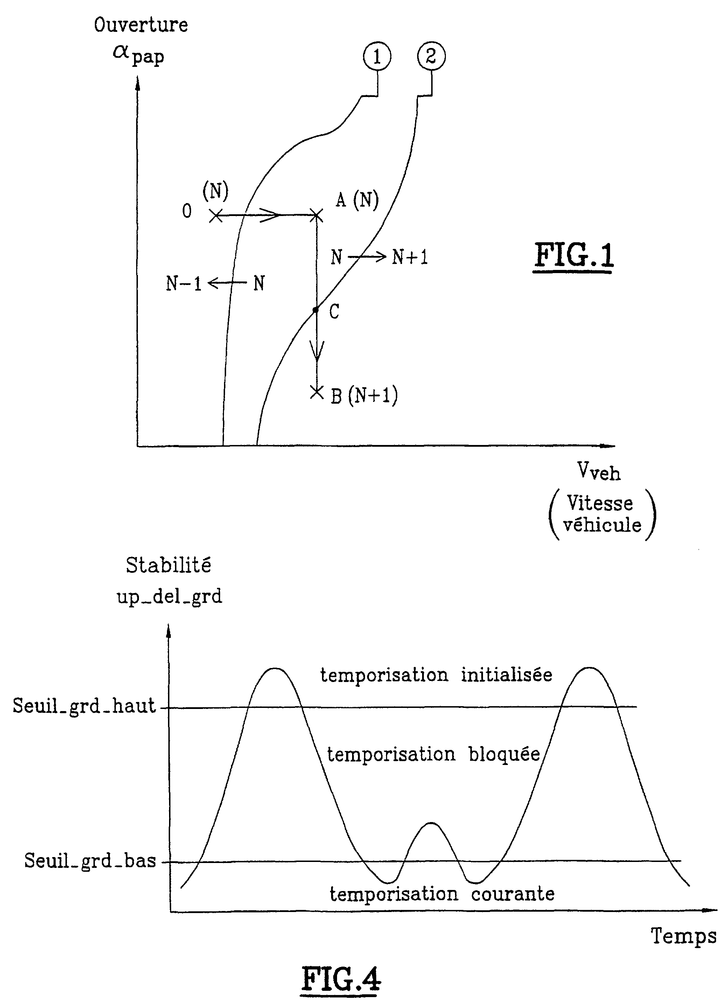

Un exemple de loi de changement de rapports couramment utilisée est proposé en Figure 1, dans laquelle la courbe 1 représente la courbe de passage descendant (c'est-à-dire un rétrogradage du rapport N vers le rapport N-1, noté N/N-1), et la courbe 2 représente la courbe de passage montant (noté N / N+1), N étant le rapport courant de la transmission automatique. Ces lois de passage sont définies de telle sorte que les changements de rapports s'effectuent à des vitesses de véhicule d'autant plus élevées que la charge du moteur est élevée.

D'autre part, de manière constante également, le passage N-1/N, c'est-à-dire en montant d'un rapport inférieur à un rapport immédiatement supérieur, se fait, pour une même charge du moteur ou plus exactement pour une même ouverture $\alpha_{pap}$, à une vitesse sensiblement supérieure à celle à laquelle a lieu le passage inverse correspondant N/N-1, c'est-à-dire en rétrogradant. Cette disposition, que l'on peut assimiler à un effet d'hystérésis, a pour but d'éviter une tendance inacceptable au pompage entre les rapports N-1 et N qui se manifesterait inévitablement si les passages en montant et en rétrogradant s'effectuaient dans les mêmes conditions de vitesse et de charge.

Si par exemple on considère un véhicule en phase d'accélération sur le rapport N avec une position d'accélérateur $\alpha_{pap}$ sensiblement constante, cette phase est représentée par le segment orienté OA de la figure 1. Si l'on suppose maintenant qu'au point A le conducteur est contraint de relever subitement le pied de l'accélérateur. Cette manoeuvre se traduit sur cette même figure 1 par le segment orienté de droite AB sensiblement vertical si le lâcher d'accélérateur est suffisamment rapide pour que la vitesse du véhicule n'ait pas le temps de chuter. Le segment AB traversera la courbe 2 au point représenté C sur la figure 1, et la transmission décide alors de passer automatiquement le rapport supérieur N+1. Ce changement de rapport est dans la majorité des cas tout à fait intempestif, et est non souhaité par le conducteur, puisque le frein moteur du véhicule se trouve réduit par le passage au rapport N+1, alors que le conducteur manifestait explicitement son intention de ralentir en relevant rapidement le pied. De ce fait, ce changement de rapport nuit à l'agrément de conduite, provoque une sensation de ne pas avoir de frein moteur, et peut parfois déconcentrer le conducteur, ce qui présente une influence sur la sécurité.

Une solution satisfaisante a néanmoins déjà été proposée, et décrite dans le document FR2545567 A. Elle consiste à associer aux courbes de passage montant et descendant de rapports, deux autres courbes: une courbe d'accélération négative, et une courbe d'ouverture croissante.

Ainsi, selon cette solution connue, le passage au rapport montant n'est autorisé que si la valeur d'ouverture $\alpha_{pap}$ est stabilisée. Le rapport est bloqué lorsque le point de fonctionnement dans le plan ($\alpha_{pap}$, vitesse) est en deçà de la courbe d'accélération négative. Il est ensuite débloqué lorsque le point de fonctionnement passe au-dessus de la courbe d'ouverture croissante (située légèrement au-dessus de la courbe d'accélération négative).

Cette solution connue présente plusieurs inconvénients, dont notamment les suivants :

-    en premier lieu, elle n'est adaptée que si le véhicule est non chargé et roule sur le plat. En effet, la courbe d'accélération négative est déterminée pour ces conditions spécifiques de roulage.

-    de plus, elle implique de nombreux paramètres de calibrage (environ 60), ce qui rend sa mise en oeuvre difficile;

-    en outre, l'hystérésis entre les courbes d'accélération négative et d'ouverture croissante doit rester faible pour que le principe puisse fonctionner, mais génère des déblocages de rapports qui ont lieu trop tôt du point de vue de la sensation de conduite.

-    enfin, cette solution ne peut pas être adaptée au style de conduite du conducteur.

L'invention a par conséquent pour objet de proposer un procédé de blocage et de déblocage des rapports de boite de vitesse d'un véhicule équipé d'une transmission automatique à rapports étagés, permettant de bloquer le rapport de la transmission (et aussi de débloquer ce même rapport) de façon efficace, quelles que soient les situations de roulage. L'invention a également pour but de résoudre les problèmes de réalisation inhérents à la solution décrite dans le brevet FR2545567 précité.

A cet effet, l'invention concerne un procédé de blocage et déblocage des rapports d'un véhicule équipé d'une boîte de vitesses automatique comportant les caractéristiques de la revendication 1.

Plus précisément, le procédé selon l'invention comporte les étapes consistant à :

a) au croisement d'une courbe de passage de rapport montant de N vers (N+1), lancer une première temporisation dite temporisation d'attente $T_a$ pendant laquelle le rapport montant (N+1) est bloqué ;
b) pendant cette temporisation $T_a$, effectuer l'analyse en logique floue de la stabilité du pied ; (cela consiste à déterminer une variable représentative, appelée UP-DEL-GRD, de la stabilité de l'ouverture de l'organe de régulation de l'admission du combustible au moteur. Si cette dernière est jugée stable, alors le rapport montant sera autorisé dès la fin de la temporisation $T_a$, à condition que la décélération du véhicule ne soit pas négative, auquel cas F3 serait alors activée. Dans le cas contraire (le conducteur relève par exempte rapidement le pied), une seconde temporisation $T_{instable}$ est lancée, pendant laquelle le rapport montant est toujours bloqué. Cette temporisation $T_{instable}$ peut dépendre de la vitesse de changement de $\alpha_{pap}$ lors du relevé de pied, ou encore d'un facteur représentatif de la sportivité de conduite du conducteur. Une procédure de réinitialisation et de blocage de cette seconde temporisation $T_{instable}$ est également définie.
c) Pendant cette temporisation $T_{instable}$, l'observation de la décélération du véhicule est faite. Elle est également réalisée en logique floue à partir des informations $\alpha_{pap}$ (ouverture du papillon moteur) et $\gamma_{veh}$ qui est l'accélération réelle du véhicule calculée par dérivation et filtrage à partir de la vitesse du véhicule $V_{veh}$. Par détermination d'une variable représentative appelée UP-DEL-AC, l'état de décélération du véhicule est identifié. Lorsque le véhicule est en phase dite de décélération on entre alors dans une phase de blocage du rapport montant dite de "décélération" qui peut être relativement longue et que l'on peut rapprocher de la notion de "courbe d'accélération négative" mais qui est réalisée à partir de l'accélération réelle du véhicule $\gamma_{veh}$, ce qui assure un bon fonctionnement pour toutes les situations de roulage (montée, descente ou plat).

Sinon, lorsque le véhicule n'entre pas en phase dite de décélération (le véhicule continue à accélérer), le rapport montant sera décidé à la fin de la temporisation $T_{instable}$.

d) Lorsque le véhicule est entré dans la phase dite de décélération, l'état de décélération du véhicule est continuellement observé. Le rapport reste bloqué tant que l'accélération du véhicule reste négative. Dès que l'accélération du véhicule est jugée suffisante (on atteint un certain niveau prédéterminé), alors la distance parcourue par le véhicule est calculée à partir de la vitesse du véhicule. On décide alors le déblocage du rapport soit :

- lorsque le véhicule a parcouru une certaine distance avec $\alpha_{pap}$ resté stable, ou
- lorsque le régime de rotation du moteur devient trop élevé, ou
- lorsque la courbe de rétrogradage N/N-1 est croisée.

La sortie du blocage après le parcours d'une certaine distance a l'avantage de ne pas débloquer le rapport trop rapidement, ce qui était un défaut de la solution décrite dans le document FR2545567. En effet, lorsque le conducteur roulant à allure modérée, par exemple en troisième vitesse, lève rapidement l'accélérateur à l'entrée d'un virage, ce rapport sera bloqué. La présente invention assurera que ce même rapport restera bloqué pendant une bonne partie du virage, le temps que le véhicule puisse parcourir une certaine distance, ce qui n'est pas le cas de la solution du brevet FR 2545567, qui libère le déblocage dès que la courbe d'ouverture décroissante est croisée.

L'invention concerne également une transmission et un véhicule automobile mettant en oeuvre le procédé de blocage et de déblocage des rapports présentant les caractéristiques ci-dessus.

L'invention sera mieux comprise et d'autres avantages de l'invention apparaîtront à la lecture de la description suivante faite à titre d'exemple non limitatif, et aux dessins annexés, dans lesquels :

- la figure 1 représente, dans un graphe de l'angle $\alpha_{pap}$ d'ouverture du papillon des gaz en fonction de la vitesse du véhicule $V_{veh,}$ un cycle caractéristique du problème du blocage du rapport en levé de pied ;
- la figure 2 représente une vue schématique partielle d'un véhicule automobile mettant en oeuvre le procédé de blocage et de déblocage des rapports en logique floue selon l'invention ;
- la figure 3 représente le principe de détermination de la grandeur caractéristique de l'instabilité de l'ouverture du papillon, en logique floue ;
- la figure 4 représente le principe d'initialisation, de maintien et de décrémentation de la temporisation $T_{instable}$ ;
- la figure 5 représente le principe de détermination en logique floue de la grandeur caractéristique de l'état de décélération du véhicule ; et
- la figure 6 représente le principe d'initialisation, de maintien et d'incrémentation de la distance permettant de sortir de la situation de blocage dite de décélération.

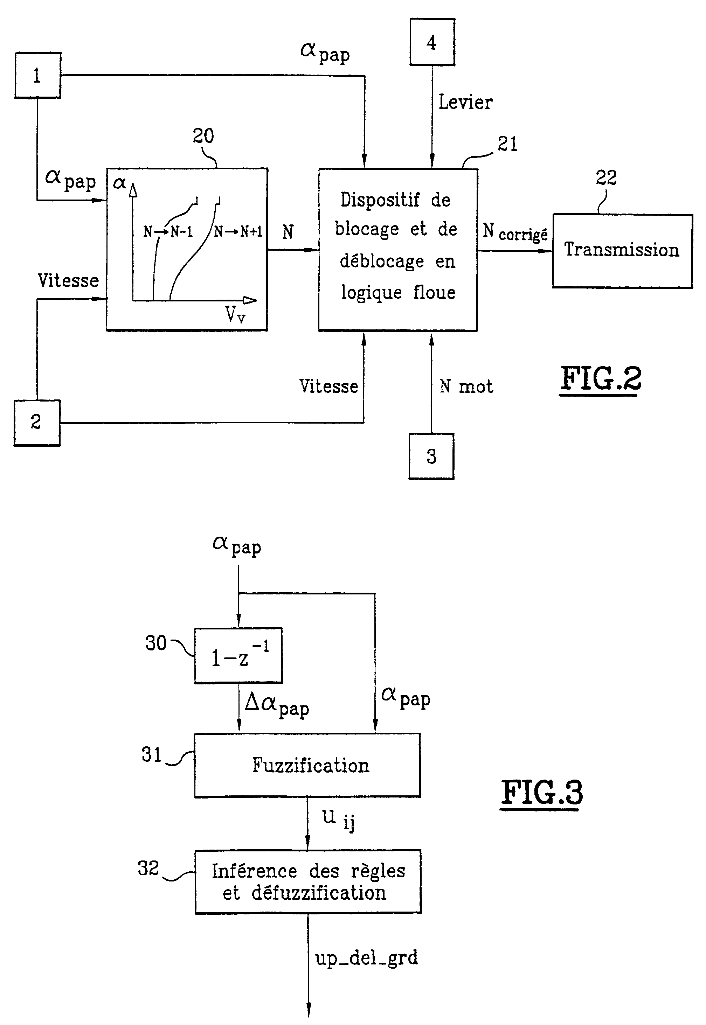

On se réfère à la figure 2. A partir des informations d'angle d'ouverture $\alpha_{pap}$ issue du capteur 1 associé au moteur, et "vitesse" du véhicule, issues du capteur 2 associé au véhicule, le bloc fonctionnel 20 détermine par une méthode cartographique comme dans le plan $\alpha pap$ et "vitesse", le rapport N à appliquer à la transmission automatique schématisée par le bloc 22.

Le dispositif 21 de blocage et de déblocage en logique floue permet de bloquer ou non le rapport N, et ce, compte tenu des informations supplémentaires : position du levier et régime moteur, issues respectivement des capteurs 4 et 3. Ce même dispositif 21 détermine une proposition de rapport N corrigé, qui tient compte des conditions de blocage ou de déblocage, l'information de rapport N corrigé étant ensuite effectivement appliquée à la transmission 22.

Selon l'une des caractéristiques de la présente invention, le dispositif de blocage et de déblocage des rapports en logique floue comporte en combinaison les trois fonctions distinctes suivantes :

- fonction F1 : blocage par temporisation d'attente
- fonction F2 : blocage en réponse à une instabilité de l'angle d'ouverture de papillon $\alpha_{pap}$
- fonction F3 : blocage en réponse à une décéleration du véhicule ou relevé de pied total.

Selon une autre des caractéristiques de la présente invention, la fonction F3 est prioritaire par rapport aux fonctions F2 et F1, et la fonction F2 est prioritaire par rapport à la fonction F1.

La fonction F1 consiste, lorsque les conditions suivantes sont réunies : F2 et F3 non actives, et le rapport montant est demandé par les lois de passage à inhiber le rapport montant (il y a blocage du rapport) pendant une temporisation $T_a$. La sortie de la fonction F1 peut avoir lieu :

- si l'une des fonctions F2 ou F3 s'active ou
- si la demande de rapport montant par les lois disparaît, ou
- si la temporisation $T_a$ est terminée.

Cette fonction F1 a pour but de temporiser légèrement le rapport montant au croisement de la courbe de passage montant N vers N+1, de façon à ce que les conditions d'entrée dans les fonctions F2 et F3 puissent être analysées de façon satisfaisante, les fonctions F2 et F3 étant susceptibles de conduire à des situations de blocage de plus longue durée.

La fonction F2 consiste, lorsque les conditions suivantes sont réunies :

- F3 non active, et
- le rapport montant est demandé par les lois de changement, et
- UP-DEL-GRD (représentant la stabilité) > seuil-GRD-haut ;
  à inhiber le rapport montant (il y a blocage du rapport) pendant une seconde temporisation dite $T_{instable}$.

La valeur UP-DEL-GRD est une variable caractéristique représentative de la stabilité de l'ouverture $\alpha pap$ de l'organe de régulation de l'admission du combustible au moteur. Cette variable est déterminée par une méthode dite de logique floue à partir de l'information $\alpha_{pap}$ issue du capteur d'ouverture papillon 1, et selon le schéma de réalisation explicité en Figure 3. Selon ce schéma, le bloc 30 détermine la variation d'angle papillon $\Delta\alpha_{pap}$ par simple différenciation

$$\Delta\alpha_{pap} = \alpha_{pap}\,(t) - \alpha_{pap}\,(t\text{-}T_e)$$

où t est l'instant d'échantillonnage courant et $T_e$ est la période d'échantillonnage. Le bloc 31 réalise la fuzzification des variables $\Delta\alpha_{pap}$ et $\alpha_{pap}$, conformément aux ensembles flous intervenant dans les règles floues de fonctionnement de la fonction F2. De ce bloc 31 sont déduits les degrés d'appartenance respectifs de $\alpha pap$ et de $\Delta\alpha_{pap}$, notés $\mu_{ij}$, aux sous-ensembles flous, et qui alimentent le bloc de règles incluses dans le bloc 32. Le bloc 32 a pour fonction de calculer la variable UP-DEL-GRD, représentative de la stabilité de la position du papillon, classiquement par inférence des règles floues et des fuzzifications. A titre d'exemple, les règles floues qui interviennent dans le bloc 32 pourraient être :

- R1 : si $\Delta\alpha_{pap}$ est négatif et $\alpha_{pap}$ est moyen, alors UP-DEL-GRD est grand.
- R2 : si $\Delta\alpha_{pap}$ est très négatif et $\alpha pap$ est grand, alors UP-DEL-GRD est grand, correspondant à une grande stabilité.
- R3 : si $\Delta\alpha_{pap}$ est positif, alors UP-DEL-GRD est moyen, sinon UP-DEL-GRD est faible.

En conséquence, selon que le pied est stable ou non, UP-DEL-GRD aura des valeurs plus ou moins importantes. De telles règles permettent de gérer la stabilité de l'ouverture des gaz de façon différente aux faibles/moyennes charges et aux fortes charges, car un conducteur a tendance à relever le pied de l'accélérateur plus rapidement aux fortes charges comparativement aux faibles charges.

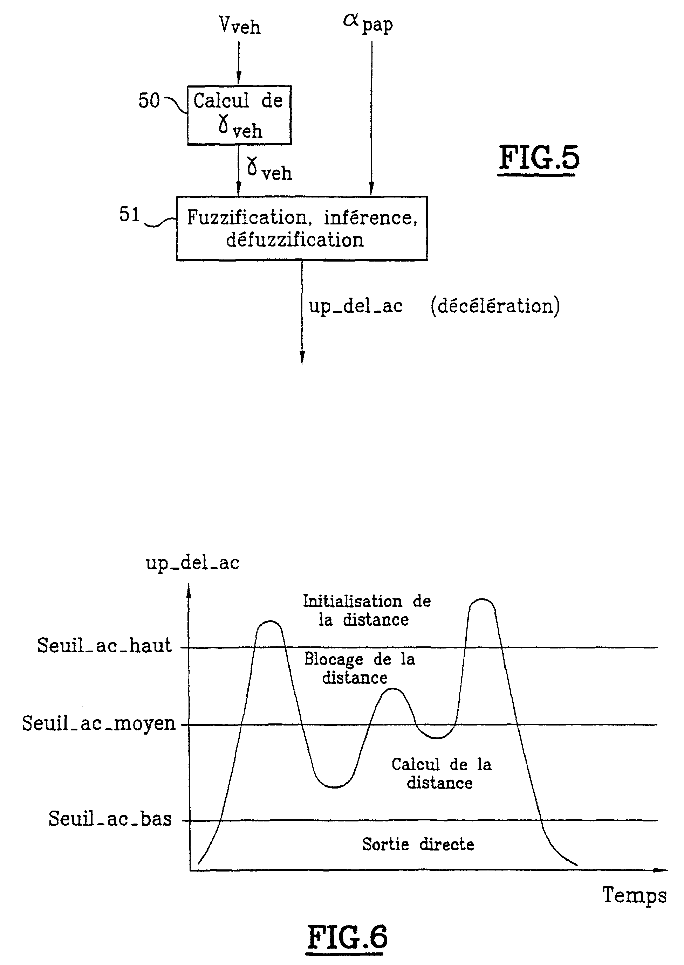

Ainsi, lorsque la variable UP-DEL-GRD représentative de la stabilité de l'angle papillon est supérieure à un seuil noté seuil-GRD-haut (voir figure 4), et si d'autres conditions sont satisfaites, le rapport montant se trouve bloqué et une temporisation l'instable est déclenchée. Cette temporisation est ré initialisée, bloquée ou courante selon les valeurs de stabilité prises par UP-DEL-GRD et ce, selon le schéma représenté en figure 4.

Lorsque la variable de stabilité UP-DEL-GRD est supérieure au seuil dit « seuil-GRD-haut », la temporisation est initialisée à une valeur qui dépend de la variation d'ouverture de papillon $\Delta\alpha_{pap}$ et éventuellement d'un indicateur de la sportivité de conduite du conducteur.

Lorsque la stabilité UP-DEL-GRD est comprise entre les limites seuil-GRD-bas et seuil-GRD-haut, la temporisation est bloquée.

Lorsque la stabilité UP-DEL-GRD est inférieure ou égal à seuil-GRD-bas, la temporisation est courante. Cette notion d'hystérésis et de ré initialisation assure que le rapport restera bien bloqué tant que $\alpha$pap restera instable, et que le blocage sera robuste par rapport aux éventuels bruits de mesure sur l'information $\alpha_{pap}$.

La sortie de la fonction F2 d'inhibition du rapport montant peut avoir lieu si :

- la fonction F3 s'active (blocage pour décélération) ou si
- la demande de rapport montant par les lois de passage disparaît, ou si
- la temporisation $T_{instable}$ est écoulée, ou si
- le conducteur actionne le levier de vitesses dans le but d'obtenir un rapport montant, ou si
- $N_{mot} \geq$ seuil-$N_{mot}$-haut (sur-régime moteur).

Ainsi, cette fonction F2 a pour but de bloquer le rapport montant tant que l'angle papillon reste instable, dans le but d'améliorer la qualité des passages montants et d'attendre l'entrée éventuelle dans la phase de blocage de longue durée décrite et réalisée par la fonction F3. Cette dernière consiste, lorsque les conditions suivantes sont réunies :

- le rapport montant est demandé par les lois,
- UP-DEL-AC > seuil-AC-haut (décélération supérieure à un seuil),
- $N_{mot}$ < seuil-$N_{mot}$-haut,

à inhiber le rapport montant (il y a blocage du rapport).

La valeur UP-DEL-AC est une variable caractéristique représentative de l'état de décélération du véhicule. Elle est déterminée par la méthode de logique floue à partir des informations $\gamma_{veh}$ (décélération ou accélération du véhicule, en fonction de son signe) et $\alpha_{pap}$, angle papillon issues du capteur 1. L'accélération du véhicule est calculée à partir de la vitesse du véhicule $V_{veh}$ par dérivation et filtrage numérique du premier ordre classique. La détermination de l'état de décélération UP-DEL-AC est explicitée en relation à la figure 5. Le bloc fonctionnel 50 détermine l'accélération $\gamma_{veh}$ par dérivation et filtrage. Le bloc 51 détermine la variable UP-DEL-AC caractéristique de l'état de décélération du véhicule, par logique floue (fuzzification, inférence des règles et défuzzification). A titre d'exemple, les règles floues qui interviennent dans le bloc 51 pourraient être :

R1 : si $\gamma_{veh}$ est négatif ou $\alpha_{pap}$ est petit, alors UP-DEL-AC est grand.
R2 : si $\gamma_{veh}$ est positif et $\alpha_{pap}$ est moyen-grand, alors UP-DEL-AC est petit.

Lorsque l'accélération du véhicule devient négative ou lorsque le conducteur relâche significativement l'accélérateur, UP-DEL-AC prend d'importantes valeurs, indiquant l'intention de bloquer le rapport montant.

Ainsi, comme montré sur la figure 6, lorsque la variable UP-DEL-AC devient supérieure à un seuil (UP-DEL-AC > seuil-AC-haut), la décision d'entrer dans la phase de blocage dite de décélération est prise. La sortie de la fonction F3 peut avoir lieu si : $N_{mot} \geq$ seuil-$N_{mot}$-haut (sur-régime moteur), ou si

- le véhicule a parcouru une certaine distance d paramétrable, ou si
- le conducteur actionne manuellement le levier de vitesses pour obtenir un rapport montant, ou si
- la courbe de rétrogradage N vers N-1 est croisée.

Ainsi, la sortie de cette fonction F3 a lieu principalement après avoir parcouru une certaine distance, qui est calculée par intégration de la vitesse du véhicule $V_{veh}$ Cette distance est réinitialisée, bloquée ou courante selon l'état de décélération du véhicule, comme représenté en figure 6.

Lorsque UP-DEL-AC > seuil-AC-haut, alors la distance est ré-initialisée à zéro.

Lorsque seuil-AC-moyen < UP-DEL-AC $\leq$ seuil-AC-haut, la distance est bloquée à sa valeur ou UP-DEL-GRD > seuil-GRD-bas.

Lorsque UP-DEL-AC < seuil-AC-moyen, la distance est calculée. Lorsqu'elle atteint une certaine valeur qui peut dépendre du rapport N corrigé, et éventuellement du caractère sportif du conducteur, la sortie de F3 a lieu et le rapport montant est décidé.

Ces phases d'initialisation, de maintien, d'incrémentation de la distance au bout de laquelle intervient le rapport supérieur, permettent de sortir correctement de la situation de blocage du rapport, c'est-à-dire sans de sortie intempestive, et d'être tout en étant robustes par rapport aux bruits de mesure sur l'information de vitesse du véhicule.

Selon une autre caractéristique de la présente invention, il est très facile d'enrichir les prestations globales du blocage et déblocage du rapport, par exemple en tenant compte d'une information supplémentaire caractéristique de l'accélération transversale du véhicule $\gamma_t$. Il suffirait d'enrichir alors la base de règles floues de la fonction F3 par des règles appropriées :

R3 : si $\gamma_t$ est moyen, alors UP-DEL-AC est moyen.
R4 : si $\gamma_t$ est grand, alors UP-DEL-AC est grand, etc.

## Revendications

**1.** Procédé de commande par blocage et déblocage des rapports d'un véhicule équipé d'une boîte de vitesses automatique, **caractérisé en ce qu'**il comporte en combinaison des fonctions (F1, F2, F3) consistant à

- F1: bloquer le passage d'un rapport de transmission pendant une première temporisation, dite temporisation d'attente ($T_a$);
- F2: bloquer le passage de ce rapport pendant une seconde temporisation $T_{instable}$ en réponse à une instabilité de l'angle d'ouverture ($\alpha_{pap}$) de papillon d'alimentation en combustible; et
- F3: bloquer le passage de ce rapport en réponse à une décélération du véhicule.

2. Procédé selon la revendication 1, **caractérisé en ce qu'**il comporte les étapes consistant à :

a) au croisement d'une courbe de passage de rapport montant (N/N+1), lancer une temporisation d'attente $T_a$ pendant laquelle le rapport montant est bloqué;
b) pendant cette temporisation d'attente Ta, effectuer l'analyse de la stabilité (UP-DEL-GRD) de l'ouverture de l'organe de régulation de l'admission du combustible au moteur;
c) si ladite ouverture est jugée stable, alors le rapport montant est autorisé à la fin de la temporisation $T_a$, sinon une seconde temporisation $T_{instable}$ est lancée, pendant laquelle le rapport montant reste bloqué.
d) Pendant cette temporisation $T_{instable}$, déterminer l'accélération réelle ($\gamma_{veh}$) du véhicule, et lorsque le véhicule est en phase dite de décélération, entrer dans une phase de blocage du rapport montant, sinon, passer le rapport montant à la fin de la temporisation $T_{instable}$.

3. Procédé selon la revendication 1, **caractérisé en ce que** l'analyse de la stabilité de l'ouverture de l'organe de régulation de l'admission du combustible au moteur et l'accélération réelle ($\gamma_{veh}$) du véhicule sont réalisées en logique floue.

4. Procédé selon la revendication 1, 2 ou 3, **caractérisé en ce que** la temporisation $T_{instable}$ dépend de la vitesse de l'ouverture ($\Delta\alpha_{pap}$) de l'organe de régulation de l'admission du combustible au moteur lors du relevé de pied, et/ou d'un facteur représentatif de la sportivité du conducteur.

5. Procédé selon l'une quelconque des revendications précédentes, **caractérisé en ce que**, lorsque le véhicule est entré dans la phase de décélération, on maintient le rapport courant bloqué tant que l'accélération du véhicule reste négative et inférieure à un seuil prédéterminé (SEUIL-AC-BAS)

6. Procédé selon l'une quelconque des revendications précédentes, **caractérisé en ce que** dès que la décélération du véhicule atteint un certain niveau prédéterminé, on calcule la distance parcourue par le véhicule, et on décide le déblocage du rapport soit :

- lorsque le véhicule a parcouru une certaine distance prédéterminée avec l'ouverture ($\alpha_{pap}$) de l'organe de régulation de l'admission du combustible au moteur restée stable, ou
- lorsque le régime de rotation du moteur devient trop élevé, ou
- lorsque la courbe de rétrogradage N/N-1 est croisée.

7. Procédé selon l'une quelconque des revendications précédentes, **caractérisé en ce que** la fonction (F3) de blocage pour décélération est prioritaire par rapport à la fonction (F2) de blocage pour instabilité de l'angle d'ouverture de papillon ($\alpha_{pap}$), qui est elle-même prioritaire par rapport à la fonction (F1) de blocage pendant une temporisation d'attente.

8. Procédé selon l'une quelconque des revendications précédentes, **caractérisé en ce que** la fonction (F3) de blocage pour décélération tient compte d'une valeur représentative de l'accélération transversale ($\gamma_t$) du véhicule.

9. Transmission automatique à rapports étagés, notamment pour véhicule automobile, **caractérisée en ce qu'**elle met en oeuvre le procédé de blocage de changements de rapports selon l'une quelconque des revendications précédentes.

10. Véhicule automobile, **caractérisé en ce qu'**il comporte une transmission automatique à rapports étagés selon la revendication 9.

**Claims**

1. Method of control by blocking and releasing of gears of a vehicle fitted with an automatic gearbox, **characterised in that** is comprises, in combination, functions (F1, F2, F3), consisting of:

-F1 : blocking the changing of one gear of the transmission during a first period of delay, known as the waiting delay ($T_a$);

- F2 : blocking the changing of this gear during a second period of delay $T_{instable}$ in response to an instability in the angle of opening ($\alpha_{pap}$) of the throttle valve for fuel supply; and

- F3 : blocking the changing of this gear in response to deceleration of the vehicle.

2. Method according to claim 1, **characterised in that** it comprises steps consisting of

a) when a curve of upward gear-changing (N/N+1) is intersected, initiating a waiting period of delay T, during which the higher gear is blocked;

b) during this waiting period of delay $T_a$, carrying out analysis of the stability (UP-DEL-GRD) of the opening of the member for regulating the admission of fuel into the engine;

c) if said opening is judged to be stable, then the higher gear is sanctioned at the end of the period of delay $T_a$, or else a second period of delay $T_{instable}$ is initiated, during which the higher gear remains blocked;

d) during said period of delay $T_{instable}$, determining the actual acceleration ($\gamma_{veh}$) of the vehicle, and when the vehicle is in the phase of so-called deceleration, entering into a phase of looking of the higher gear, or else of changing to the higher gear at the end of the delay $T_{instable}$.

3. Method according to claim 1, **characterised in that** analysis of the stability of opening of the member for regulating the admission of fuel into the engine and the actual acceleration ($\gamma_{veh}$) of the vehicle are performed using fuzzy logic.

4. Method according to claim 1, 2 or 3, **characterised in that** the delay $T_{instable}$ depends upon the speed of opening ($\Delta\alpha_{pap}$) of the member for regulating the admission of fuel into the engine when the foot is lifted off and/or a factor representative of the sportiness of the driver.

5. Method according to any one of the preceding claims, **characterised in that** when the vehicle has entered the deceleration phase, the current gear is kept blocked while the acceleration of the vehicle remains negative and below a pre-determined threshold (LOW-AC-THRESHOLD).

6. Method according any one of the preceding claims, **characterised in that** once the deceleration of the vehicle reaches a pre-determined level, the distance travelled by the vehicle is calculated and releasing of the gear is brought about either:

- when the vehicle has travelled a certain pre-determined distance with the opening ($\alpha_{pap}$) of the member regulating the admission of fuel into the engine remaining stable, or

- when the engine revolution speed becomes too high, or

- when the curve of changing down (N/N-1) is intersected.

7. Method according to any one of the preceding claims, **characterised in that** the blocking function (F3) for deceleration has priority compared to blocking function (F2) for instability of the angle of opening of the throttle valve ($\alpha_{pap}$), which itself has priority compared to the blocking function (F1) during a waiting period of delay.

8. Method according to any one of the preceding claims, **characterised in that** the blocking function (F3) for deceleration takes into account a value representative of the transversal acceleration ($\gamma_t$) of the vehicle.

9. Automatic transmission with stepped gears, particularly for an automotive vehicle, **characterised in that** it implements the method of blocking gear changes according to any one of the preceding claims.

10. Automotive vehicle **characterised in that** it comprises an automatic transmission with stepped gears according to claim 9.

**Patentansprüche**

1. Steuerverfahren durch Blockieren und Lösen der Übersetzungsverhältnisse eines mit einem automatischen Übersetzungsgetriebe ausgerüsteten Fahrzeuges, **dadurch gekennzeichnet, daß** es kombiniert Funktionen (F1, F2, F3) aufweist, die aus folgendem bestehen :

F1 : Blockieren des Überganges eines Übersetzungsverhältnisses während einer ersten , Warte-Verzögerungszeit (Ta) genannten Verzögerungszeit ;

F2 : Blockieren des Überganges dieses Übersetzungsverhältnisses während einer zweiten Verzögerungszeit $T_{instable}$ als Antwort auf eine Unstabilität des Öffnungswinkels ($\alpha_{pap}$) des Drosselventils für die Kraftstoffzufuhr ; und

F3 : Blockieren des Überganges dieses Übersetzungsverhältnisses als Antwort auf eine Bremsverzögerung des Fahrzeuges.

2. Verfahren nach Anspruch 1, **dadurch gekennzeichnet, daß** es Etappen aufweist, die aus folgendem bestehen :

a) beim Schneiden einer Kurve des Übergangs des zunehmenden Übersetzungsverhälnisses (N/N+1), eineWarte-Verzögerungszeit Ta starten während derer das zunehmende Übersetzungsverhältnis blockiert ist;

b) während dieser Warte-Verzögerungszeit Ta die Stabilitätsanalyse (ÜP-DEL-GRD) der Öffnung des Regelungsorgans für die Kraftstoffzufuhr zum Motor durchführen;

c) wenn besagte Öffnung als stabil betrachtet wird, wird also das zunehmende Übersetzungsverhältnis am Ende der Verzögerungszeit Ta zugelassen , andernfalls wird eine zweite Verzögerungszeit $T_{instable}$ gestartet, während der das zunehmende Übersetzungsverhältnis blockiert bleibt;

d) Während dieser Verzögerungszeit Tinstable, Bestimmen der tatsächlichen Beschleunigung ($\gamma_{veh}$) des Fahrzeuges, und wenn das Fahrzeug sich in der sogenannten Bremsverzögerungsphase befindet, Eintritt in eine Blockierungsphase des zunehmenden Übersetzungsverhältnisses, andernfalls am Ende der Verzögerungszeit $T_{instable}$ zum zunehmenden Übersetzungsverhältnis übergehen.

3.  Verfahren nach Anspruch 1, **dadurch gekennzeichnet, daß** die Stabilitätsanalyse der Öffnung des Regelungsorgans für die Kraftstoffzufuhr zum Motor und der tatsächlichen Beschleunigung ($\gamma_{veh}$) des Fahrzeugs mit Hilfe der Unschärfelogik durchgeführt werden.

4.  Verfahren nach Anspruch 1, 2 oder 3, **dadurch gekennzeichnet, daß** die Verzögerungzeit $T_{instable}$ von der Geschwindigkeit der Öffnung des Regelungsorgans für die Kraftstoffzufuhr zum Motor beim Anheben des Fußes und/oder einem für die Sportlichkeit des Fahrers repräsentativen Faktor abhängt.

5.  Verfahren nach irgendeinem der vorangehenden Ansprüche, **dadurch gekennzeichnet, daß**; wenn das Fahrzeug in die Bremsverzögerungsphase eingetreten ist, man das laufende blockierte Übersetzungsverhältnis beibehält, solange die Beschleunigung des Fahrzeugs negativ und unterhalb eines vorbestimmten Grenzwertes (Grenzwert-AC-unten) bleibt.

6.  Verfahren nach irgendeinem der vorangehenden Ansprüche, **dadurch gekennzeichnet, daß**, sobald die Bremsverzögerung des Fahrzeugs ein gewisses vorbestimmtes Niveau erreicht, die vom Fahrzeug durchlaufene Strecke berechnet wird und das Lösen des Übersetzungsverhältnisses entschieden wird, oder :

    -   wenn das Fahrzeug mit einer stabil gebliebenen Öffnung ($\alpha_{pap}$) des Regelungsorgans für die Kraftstoffzufuhr zum Motor durchlaufen hat , oder

-   wenn der Rotationsleistungsbereich des Motor zu hoch wird, oder

-   wenn die Rückschaltkurve N/N-1 geschnitten wird.

7.  Verfahren nach irgendeinem der vorangehenden Ansprüche, **dadurch gekennzeichnet, daß** die Blockierfunktion (F3) für die Bremsverzögerung prioritär in Bezug auf die Blockierfunktion (F2) für die Unstabilität des Öffnungswinkels ($\alpha_{pap}$) des Drosselventils ist , welche selber prioritär in Bezug auf die Blockierfunktion (F1) während der Warte-Verzögerungszeit ist.

8.  Verfahren nach irgendeinem der vorangehenden Ansprüche, **dadurch gekennzeichnet, daß** die Blockierfunktion (F3) für die Bremsverzögerung einem repräsentativen Wert für die Querbeschleunigung ($\gamma t$) des Fahrzeuges Rechnung trägt.

9.  Automatisches Übersetzungsgetriebe mit abgestuften Übersetzungsverhältnissen, insbesondere für Fahrzeuge, **dadurch gekennzeichnet, daß** sie das Blockierungsverfahren für die Übersetzungsverhältnisse nach irgendeinem der vorangehenden Ansprüche durchführt.

10. Fahrzeug, **dadurch gekennzeichnet, daß** es ein automatisches Übersetzungsgetriebe mit abgestuften Übersetzungsverhältnissen nach Anspruch 9 aufweist.

Ouverture $\alpha_{pap}$

(1) (2)

(N)

0 $\times$ $\longrightarrow$ $\times$ A (N)

N $\longrightarrow$ N+1

N−1 $\longleftarrow$ N

C

B (N+1)

$V_{veh}$

$\left( \begin{array}{c} \text{Vitesse} \\ \text{véhicule} \end{array} \right)$

## FIG.1

Stabilité
up_del_grd

Seuil_grd_haut

temporisation initialisée

temporisation bloquée

Seuil_grd_bas

temporisation courante

Temps

## FIG.4

$\alpha_{pap}$

1

4

Levier

20

$\alpha_{pap}$

$\alpha$

$N \rightarrow N-1$  $N \rightarrow N+1$

N

21

Dispositif de blocage et de déblocage en logique floue

$N_{corrigé}$

22

Transmission

Vitesse

$V_v$

Vitesse

N mot

2

3

## FIG.2

$\alpha_{pap}$

30

$1-z^{-1}$

$\Delta \alpha_{pap}$

$\alpha_{pap}$

31

Fuzzification

## FIG.3

$u_{ij}$

32

Inférence des règles et défuzzification

up_del_grd

$V_{veh}$      $\alpha_{pap}$

50 — Calcul de $\delta_{veh}$

**FIG.5**

$\delta_{veh}$

51 — Fuzzification, inférence, défuzzification

up_del_ac   (décélération)

up_del_ac

Seuil_ac_haut

Initialisation de la distance

Blocage de la distance

Seuil_ac_moyen

Calcul de la distance

Seuil_ac_bas

Sortie directe

Temps

**FIG.6**